# EUROPEAN PATENT SPECIFICATION

(11) **EP 3 989 478 B1**
(45) Date of publication and mention of the grant of the patent: **18.10.2023**
(21) Application number: 20203239.7
(22) Date of filing: 22.10.2020
(51) Int. Cl.: H04L 9/32, G06F 21/57

(54) **COMPUTING SYSTEM AND DEVICE FOR HANDLING A CHAIN OF TRUST**
RECHENSYSTEM UND VORRICHTUNG ZUR HANDHABUNG EINER VERTRAUENSKETTE
SYSTÈME INFORMATIQUE ET DISPOSITIF DE MANIPULATION D'UNE CHAÎNE DE CONFIANCE

(43) Date of publication of application: 27.04.2022
(73) Proprietor: Moxa Inc., New Taipei City 231 (TW)
(72) Inventor: Wu, Ching-Ping, 231 New Taipei City (TW); Lin, Chao-Ti, 231 New Taipei City (TW); Liang, Chen-Yu, 231 New Taipei City (TW)
(74) Representative: Straus, Alexander

(56) References cited:
- US-A1- 2013 152 180
- HAJ-YAHYA JAWAD ET AL: "Lightweight Secure-Boot Architecture for RISC-V System-on-Chip", 20TH INTERNATIONAL SYMPOSIUM ON QUALITY ELECTRONIC DESIGN (ISQED), IEEE, 6 March 2019 (2019-03-06), pages 216-223, XP033539837, DOI: 10.1109/ISQED.2019.8697657 [retrieved on 2019-04-23]

## Description

### Field of the Invention

The present invention relates to a computing system and a device for handling a chain of trust.

### Background of the Invention

A chain of trust is considered in a secure boot process for a computer device. During the secure boot process, the computer device verifies integrity and authenticity of software, firmware and configuration data needed for the secure boot process with a capability of a root of trust (RoT). However, the computer device in the prior art may not include the capability of the RoT. If the computer device without the capability of the RoT (i.e., a non-secure device) is attacked or invaded, the non-secure device may be led to a non-secure environment or an invalid status, which results in damage of data and information or an illegal modification. Thus, how to handle a chain of trust for the non-secure device is an important problem to be solved.

Prior art solutions are disclosed in document US 2013/152180 A1 and in HAJ-YAHYA JAWAD ET AL "Lightweight Secure-Boot Architecture for RISC-V System-on-Chip", 20TH INTERNATIONAL SYMPOSIUM ON QUALITY ELECTRONIC DESIGN (ISQED), IEEE, 6 March 2019 (2019-03-06), pages 216-223, XP033539837, DOI: 10.1 109/ISQED.2019.8697657.

### Summary of the Invention

The present invention therefore provides a computing system and a device as defined in the appended claims for handling a chain of trust to solve the abovementioned problem.

This is achieved by a communication device for handling the chain of trust.

As will be seen more clearly from the detailed description following below, the claimed computing system for handling a chain of trust comprises a non-secure device comprising a receiving module, for receiving a signal for activating the non-secure device; and a secure device coupled to the non-secure device comprising a root of trust (RoT) module, for verifying at least one first signature of a bootloader for the non-secure device, wherein the bootloader is stored in the RoT module; and a transmitting module, coupled to the RoT module, for transmitting the signal to the receiving module to activate the non-secure device, after the at least one first signature is verified as successful.

### Brief Description of the Drawings

Fig. 1 is a schematic diagram of a computing system according to an example of the present invention.
Fig. 2 is a schematic diagram of a computing system according to an example of the present invention.
Fig. 3 is a flowchart of a process according to an example of the present invention.

### Detailed Description

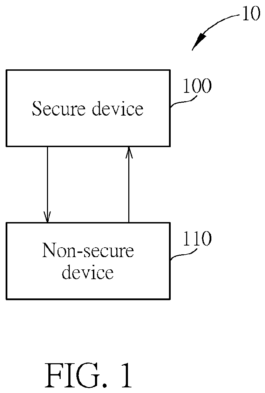

Fig. 1 is a schematic diagram of a computing system 10 according to an example of the present invention. The computing system 10 may be any computing system utilizing a secure boot process, and is briefly composed of a secure device 100 and a non-secure device 110. In Fig. 1, the secure device 100 and the non-secure device 110 are simply utilized for illustrating the structure of the computing system 10. The secure device 100 includes a capability of a root of trust (RoT), and the non-secure device 110 does not include the capability of the RoT. For example, the computing system 10 may be installed in a mobile phone, a laptop, a tablet computer or any computer device performing a secure boot process, and is not limited herein. In addition, the secure device 100 may be a microcontroller unit (MCU), a Central Processing Unit (CPU), a system on chip (SoC), a field programmable gate array (FPGA), etc., and is not limited herein. The non-secure device 110 may be a MCU, a CPU, a SoC, a FPGA, etc., and is not limited herein.

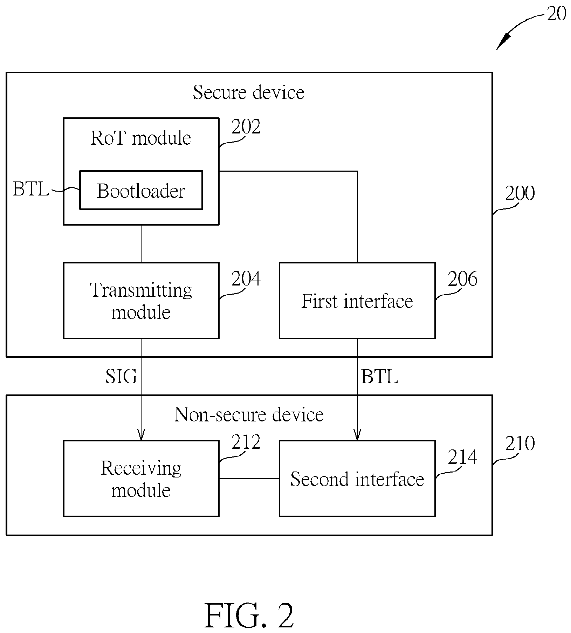

Fig. 2 is a schematic diagram of a computing system 20 according to an example of the present invention. The computing system 20 includes a secure device 200 and a non-secure device 210. The secure device 200 includes a RoT module 202, a transmitting module 204 and a first interface 206. The non-secure device 210 includes a receiving module 212 and a second interface 214. In detail, the RoT module 202 verifies at least one first signature of a bootloader BTL for the non-secure device 210, wherein the bootloader BTL is stored in the RoT module 202. The transmitting module 204 is coupled to the RoT module 202, and transmits a signal SIG to the receiving module 212 to activate the non-secure device 210, after the at least one first signature is verified as successful. The receiving module 212 receives the signal SIG from the transmitting module 204. The non-secure device 210 loads the bootloader BTL, after the receiving module 212 receives the signal SIG from the transmitting module 204.

According to the above description, a computing system is provided for handling a chain of trust for a non-secure device with a RoT module of a secure device verifying a bootloader for the non-secure device successfully. Thus, the problem of handling a chain of trust for a non-secure device is solved.

In one example, the RoT module 202 verifies at least one second signature for the secure device 200, before verifying the at least one first signature. In one example, the RoT module 202 verifies at least one third signature of at least one of software and firmware for the non-secure device 210. That is, the RoT module 202 verifies the at least one third signature of the software and/or the firmware for booting up the non-secure device 210 if needed.

In one example, the transmitting module 204 may be included in the RoT module 202. That is, the RoT module 202 may transmit the signal SIG to the receiving module 212 to activate the non-secure device 210, after the at least one first signature is verified as successful.

In one example, the secure device 200 transfers to a passive mode before the transmitting module 204 transmits the signal SIG, after the at least one first signature is verified as successful. The passive mode is for the non-secure device 210 to load the bootloader BTL in the RoT module 202 via the first interface 206 of the secure device 200. That is, the secure device 200 transfers to the passive mode as a slave device of the non-secure device 210, for the non-secure device 210 to load the bootloader BTL via the first interface 206 after the bootloader BTL is verified as successful. In one example, the RoT module 202 includes a capability of serial flash emulation (SFE). That is, the secure device 200 including the RoT module 202 can be regarded as a flash memory emulator according to the capability of the SFE. In one example, the secure device 200 may transfer to a mode (e.g., the passive mode) operated as the flash memory emulator according to the capability of the SFE, after the bootloader BTL is verified as successful.

In one example, the interfaces in the above examples may be Serial Peripheral Interface(s) (SPI(s)), Inter-Integrated Circuit(s) (12C(s)), Secure Digital Memory Card Input Output(s) (SDIO(s)), Universal Serial Bus(s) (USB(s)) or Peripheral Component Interconnect(s) (PCI(s)), and is not limited herein.

In one example, the secure device 200 powers off, if the at least one first signature is not verified as successful. That is, the secure device 200 stops the non-secure device 210 from loading the bootloader BTL, e.g., if the bootloader BTL is tampered, and/or the at least one first signature is different from the default content. In one example, the secure device 200 does not activate the non-secure device 210, if the at least one first signature is not verified as successful.

In one example, the RoT module 202 includes a capability of physically unclonable function (PUF). In one example, the RoT module 202 includes a capability of physical-destruction-proof. In one example, the RoT module 202 includes a customer root key (CRK) public key for verifying the at least one first signature. In one example, the RoT module 202 includes a One Time Programmable (OTP) module for storing the CRK public key. In one example, the RoT module 202 includes a true random number generator. In one example, the RoT module 202 includes a root key for verifying the CRK public key. In one example, the CRK public key is an Elliptic Curve Digital Signature Algorithm (ECDSA) key. In one example, the CRK public key is a Rivest-Shamir-Adleman (RSA) key.

In one example, the non-secure device 210 loads the bootloader BTL in the RoT module 202, after the receiving module 212 receives the signal SIG from the transmitting module 204. In one example, the non-secure device 210 loads the bootloader BTL via the second interface 214 of the non-secure device 210. The second interface 214 is coupled to the first interface 206 of the secure device 200. In one example, the non-secure device 210 boots up according to the bootloader BTL, after loading the bootloader BTL in the RoT module 202. In one example, the non-secure device 210 does not include any RoT module.

In one example, the RoT module 202 includes a first flash memory for storing the bootloader BTL for the non-secure device 210. In one example, a CRK key pair including a CRK public key and a CRK private key is generated according to the ECDSA or the RSA. The CRK public key is stored in the RoT module 202. In one example, the RoT module 202 includes a second flash memory. In one example, the second flash memory generates first data associated with the bootloader BTL that is successfully verified according to the CRK private key and a first tool (e.g., an application). In one example, the second flash memory partitions the first data into a plurality of packets associated with the bootloader BTL that is successfully verified according to a second tool (e.g., an application). In one example, the second flash memory informs (e.g., transmits) the RoT module 202 of the plurality of packets according to a third tool (e.g., an application). In one example, the first tool is a tool utilizing an ECDSA signature or a RSA signature. In one example, the plurality of packets may be a plurality of serial communication protocol (SCP) packets. In one example, the second tool may be a tool for partitioning the first data into the plurality of packets available for SCP transmission(s). In one example, the third tool may be a tool for informing (e.g., transmitting) the plurality of SCP packets. In one example, the second flash memory may inform (e.g., transmit) the RoT module 202 of the plurality of packets according to a standard of Recommended Standard-232 (RS-232).

In one example, the non-secure device 210 may load the bootloader BTL via the RoT module 202. In one example, the non-secure device 210 may load the bootloader BTL via a third interface of the RoT module 202. In one example, the non-secure device 210 may load the bootloader BTL via the third interface and a fourth interface of the RoT module 202. That is, the non-secure device 210 may load the bootloader BTL via the interface(s) of the RoT module 202. In one example, the interface(s) of the RoT module 202 may be SPI(s), but is not limited herein.

In one example, the RoT module 202 satisfies the following conditions for realizing the capability of the RoT (a) the result of the operation of the RoT module 202 is predictable; (b) the result of the operation of the RoT module 202 will not change; (c) the firmware(s) needed for the RoT module 202 is integrated; (d) data lost does not happen in the RoT module 202. (e) the data in the RoT module 202 will not be tampered with any means; (f) there is no fake data or misinformation existed in the RoT module 202.

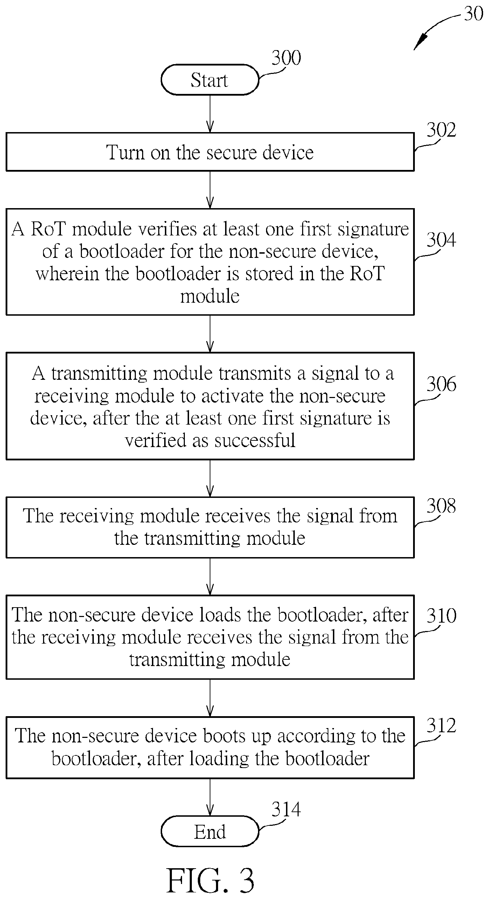

Operations of the computing system 20 in the above examples can be summarized into a process 30 shown in Fig. 3. The process 30 is utilized in the computing system 20, and includes the following steps:
Step 300: Start.
Step 302: Turn on the secure device.
Step 304: A RoT module verifies at least one first signature of a bootloader for the non-secure device, wherein the bootloader is stored in the RoT module.
Step 306: A transmitting module transmits a signal to a receiving module to activate the non-secure device, after the at least one first signature is verified as successful.
Step 308: The receiving module receives the signal from the transmitting module.
Step 310: The non-secure device loads the bootloader, after the receiving module receives the signal from the transmitting module.
Step 312: The non-secure device boots up according to the bootloader, after loading the bootloader.
Step 314: End.

The process 30 is used for illustrating the operations of the computing system 20. Detailed description and variations of the process 30 can be referred to the previous description, and are not narrated herein.

Those skilled in the art should readily make combinations, modifications and/or alterations on the abovementioned description and examples. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means may be the secure device 200.

Examples of the hardware may include analog circuit(s), digital circuit(s) and/or mixed circuit(s). For example, the hardware may include ASIC(s), field programmable gate array(s) (FPGA(s)), programmable logic device(s), coupled hardware components or combination thereof. In another example, the hardware may include general-purpose processor(s), microprocessor(s), controller(s), digital signal processor(s) (DSP(s)) or combination thereof.

Examples of the software may include set(s) of codes, set(s) of instructions and/or set(s) of functions retained (e.g., stored) in a storage unit, e.g., a computer-readable medium. The computer-readable medium may include SIM, ROM, flash memory, RAM, CD-ROM/DVD-ROM/BD-ROM, magnetic tape, hard disk, optical data storage device, non-volatile storage unit, or combination thereof. The computer-readable medium (e.g., storage unit) may be coupled to at least one processor internally (e.g., integrated) or externally (e.g., separated). The at least one processor which may include one or more modules may (e.g., be configured to) execute the software in the computer-readable medium. The set(s) of codes, the set(s) of instructions and/or the set(s) of functions may cause the at least one processor, the module(s), the hardware and/or the electronic system to perform the related steps.

Examples of the electronic system may include a SoC, system in package (SiP), a computer on module (CoM), a computer program product, an apparatus, a mobile phone, a laptop, a tablet computer, an electronic book or a portable computing system, and the secure device 200.

To sum up, the present invention provides a computing system for handling a chain of trust. The present invention solves the problem of a chain of trust for a non-secure device. Thus, a non-secure device without a capability of a RoT can be operated properly with a chain of trust.

## Claims

1. A computing system (10, 20) for handling a chain of trust, whereby the computing system comprising:
a non-secure device (110, 210), comprising:
a receiving module (212), for receiving a signal for activating the non-secure device; and
a secure device (100, 200), coupled to the non-secure device, comprising:
a root of trust, RoT, module (202), for verifying at least one first signature of a bootloader for the non-secure device, wherein the bootloader is stored in the RoT module; and
a transmitting module (204), coupled to the RoT module, for transmitting the signal to the receiving module to activate the non-secure device, after the at least one first signature is verified as successful;
wherein the non-secure device loads the bootloader from the RoT module, after the receiving module receives the signal from the transmitting module.

2. The computing system of claim 1, wherein the RoT module verifies at least one second signature for the secure device, before verifying the at least one first signature.

3. The computing system of any of claims 1-2, wherein the secure device transfers to a passive mode before the transmitting module transmits the signal, after the at least one first signature is verified as successful.

4. The computing system of claim 3, wherein the passive mode is for the non-secure device to load the bootloader from irr the RoT module via a first interface of the secure device.

5. The computing system of any of claims 1-4, wherein the secure device powers off, if the at least one first signature is not verified as successful.

6. The computing system of any of claims 1-5, wherein the RoT module verifies at least one third signature of at least one of software and firmware for the non-secure device.

7. The computing system of any of claims 1-6, wherein the RoT module comprises a capability of physically unclonable function, PUF, or comprises a customer root key, CRK, public key for verifying the at least one first signature.

8. The computing system of claim 7, wherein the CRK public key is an Elliptic Curve Digital Signature Algorithm, ECDSA, key or a Rivest-Shamir-Adleman, RSA, key.

9. The computing system of any of claims 1-8, wherein the non-secure device loads the bootloader via a second interface of the non-secure device and the second interface is coupled to a first interface of the secure device, or the non-secure device boots up according to the bootloader after loading the bootloader from the RoT module.

10. A secure device (100, 200) for handling a chain of trust, whereby the secure device comprising:
a root of trust, RoT, module (202), for verifying at least one first signature of a bootloader for a non-secure device (110, 210), wherein the bootloader is stored in the RoT module; and
a transmitting module (204), coupled to the RoT module, for transmitting a signal to the non-secure device to activate the non-secure device, after the at least one first signature is verified as successful;
wherein the non-secure device loads the bootloader from the RoT module, after a receiving module (212) of the non-secure device receives the signal from the transmitting module.

11. The secure device of claim 10, wherein the RoT module verifies at least one second signature for the secure device, before verifying the at least one first signature.

12. The secure device of any of claims 10-11, wherein the secure device transfers to a passive mode before the transmitting module transmits the signal, after the at least one first signature of the bootloader is verified as successful.

13. The secure device of any of claims 10-12, wherein the secure device powers off, if the at least one first signature is not verified as successful.

14. The secure device of any of claims 10-13, wherein the RoT module verifies at least one third signature of at least one of software and firmware for the non-secure device.

15. The secure device of any of claims 10-14, wherein the RoT module comprises a capability of physically unclonable function, PUF, or comprises a customer root key, CRK, public key for verifying the at least one first signature.

16. The secure device of claim 15, wherein the CRK public key is an Elliptic Curve Digital SignatureAlgorithm, ECDSA, key or a Rivest-Shamir-Adleman, RSA, key, or the non-secure device does not comprise any RoT module.

## Patentansprüche

1. Computersystem (10, 20) zur Handhabung einer Vertrauenskette, worin das Computersystem umfasst:
eine nicht-sichere Vorrichtung (110, 210), die umfasst:
ein Empfangsmodul (212) zum Empfangen eines Signals zum Aktivieren der nicht-sicheren Vorrichtung; und
eine sichere Vorrichtung (100, 200), die mit der nicht-sicheren Vorrichtung gekoppelt ist und die umfasst:
ein *Root-of-Trust-Modul* (202) zum Verifizieren mindestens einer ersten Signatur eines *Bootloaders* für die nicht-sichere Vorrichtung, worin der *Bootloader* in dem RoT-Modul gespeichert ist; und
ein Sendemodul (204), das mit dem RoT-Modul gekoppelt ist, um das Signal an das Empfangsmodul zu senden, um die nicht sichere Vorrichtung zu aktivieren, nachdem die mindestens eine erste Signatur als erfolgreich verifiziert wurde;
worin die nicht sichere Vorrichtung den *Bootloader* von dem RoT-Modul lädt, nachdem das Empfangsmodul das Signal von dem Sendemodul empfängt.

2. Computersystem nach Anspruch 1, wobei das RoT-Modul mindestens eine zweite Signatur für das sichere Gerät verifiziert, bevor es die mindestens eine erste Signatur verifiziert.

3. Computersystem nach einem der Ansprüche 1 bis 2, wobei die sichere Vorrichtung in einen passiven Modus übergeht, bevor das Sendemodul das Signal sendet, nachdem die mindestens eine erste Signatur als erfolgreich verifiziert wurde.

4. Computersystem nach Anspruch 3, wobei der passive Modus dazu dient, dass das nicht-sichere Gerät den *Bootloader* vom RoT-Modul über eine erste Schnittstelle des sicheren Geräts lädt.

5. Computersystem nach einem der Ansprüche 1 bis 4, wobei das sichere Gerät ausgeschaltet wird, wenn die mindestens eine erste Signatur nicht als erfolgreich verifiziert wurde.

6. Computersystem nach einem der Ansprüche 1-5, wobei das RoT-Modul mindestens eine dritte Signatur von mindestens einer Software und Firmware für das nicht sichere Gerät verifiziert.

7. Computersystem nach einem der Ansprüche 1-6, worin das RoT-Modul eine Fähigkeit einer physikalisch nicht klonierbaren Funktion, PUF, oder einen öffentlichen Kundenstamm, CRK, -schlüssel zur Verifizierung der mindestens einen ersten Signatur umfasst.

8. Computersystem nach Anspruch 7, worin der öffentliche CRK-Schlüssel ein Schlüssel des *Elliptic Curve Digital Signature Algorithm,* ECDSA, oder ein Rivest-Shamir-Adleman, RSA, -Schlüssel ist.

9. Computersystem nach Anspruch 1-8, wobei das nicht-sichere Gerät den *Bootloader* über eine zweite Schnittstelle des nicht-sicheren Geräts lädt und die zweite Schnittstelle mit der ersten Schnittstelle des sicheren Geräts gekoppelt ist, oder das nicht-sichere Gerät entsprechend dem *Bootloader* hochfährt, nachdem der *Bootloader* vom RoT-Modul geladen wurde.

10. Sichere Vorrichtung (100, 200) zur Handhabung einer Vertrauenskette, worin die sichere Vorrichtung umfasst:
ein Root-of-Trust-, RoT, Modul (202) zum Verifizieren mindestens einer ersten Signatur eines *Bootloaders* für ein nicht sicheres Gerät (110, 210), worin der *Bootloader* in dem RoT-Modul gespeichert ist; und
ein Sendemodul (204), das mit dem RoT-Modul gekoppelt ist, um ein Signal an die nicht sichere Vorrichtung zu senden, um die nicht sichere Vorrichtung zu aktivieren, nachdem die mindestens eine erste Signatur als erfolgreich verifiziert wurde;
wobei die nicht-sichere Vorrichtung den *Bootloader* von dem RoT-Modul lädt, nachdem ein Empfangsmodul (212) der nicht-sicheren Vorrichtung das Signal von dem Sendemodul empfängt.

11. Sichere Vorrichtung nach Anspruch 10, wobei das RoT-Modul mindestens eine zweite Signatur für die sichere Vorrichtung verifiziert, bevor es die mindestens eine erste Signatur verifiziert.

12. Sichere Vorrichtung nach einem der Ansprüche 10-11, wobei die sichere Vorrichtung in einen passiven Modus übergeht, bevor das Sendemodul das Signal sendet, nachdem die mindestens eine erste Signatur des *Bootloaders* als erfolgreich verifiziert wurde.

13. Sichere Vorrichtung nach einem der Ansprüche 10 bis 12, wobei sich die sichere Vorrichtung ausschaltet, wenn die mindestens eine erste Signatur nicht als erfolgreich verifiziert wurde.

14. Sichere Vorrichtung nach einem der Ansprüche 10-13, wobei das RoT-Modul mindestens eine dritte Signatur von mindestens einer Software und Firmware für die nicht sichere Vorrichtung verifiziert.

15. Sichere Vorrichtung nach einem der Ansprüche 10-14, worin das RoT-Modul eine Fähigkeit einer physikalisch nicht klonierbaren Funktion, PUF, oder einen öffentlichen Kundenstamm, CRK, -schlüssel, zur Verifizierung der mindestens einen ersten Signatur umfasst.

16. Sichere Vorrichtung nach Anspruch 15, worin der öffentliche CRK-Schlüssel ein *Elliptic Curve Digital Signature Algorithm,* ECDSA, oder ein Rivest-Shamir-Adleman, RSA, -Schlüssel ist, oder die nicht sichere Vorrichtung kein RoT-Modul umfasst.

## Revendications

1. Système informatique (10, 20) permettant de gérer une chaîne de confiance, le système informatique comprenant:
un dispositif non sécurisé (110, 210), comprenant:
un module de réception (212), pour recevoir un signal d'activation du dispositif non sécurisé; et
un dispositif sécurisé (100, 200), couplé au dispositif non sécurisé, comprenant:
un module *root of trust,* RoT, (202), pour vérifier au moins une première signature d'un chargeur de démarrage pour le dispositif non sécurisé, le chargeur de démarrage étant stocké dans le module RoT; et
un module de transmission (204), couplé au module RoT, pour transmettre le signal au module de réception afin d'activer le dispositif non sécurisé, une fois que l'au moins une première signature a été vérifiée comme réussie;
le dispositif non sécurisé charge le chargeur de démarrage à partir du module RoT, après que le module de réception a reçu le signal du module de transmission.

2. Système informatique de la revendication 1, dans lequel le module RoT vérifie au moins une deuxième signature pour le dispositif sécurisé, avant de vérifier au moins une première signature.

3. Système informatique de l'une des revendications 1 à 2, dans lequel le dispositif sécurisé passe en mode passif avant que le module de transmission ne transmette le signal, après l'au moins une première signature a été vérifiée comme réussie.

4. Système informatique de la revendication 3, dans lequel le mode passif permet au dispositif non sécurisé de charger le chargeur de démarrage du module RoT via une première interface du dispositif sécurisé.

5. Système informatique de l'une des revendications 1 à 4, dans lequel le dispositif sécurisé s'éteint si l'au moins une première signature n'est pas vérifiée comme réussie.

6. Système informatique de l'une des revendications 1 à 5, dans lequel le module RoT vérifie au moins une troisième signature d'au moins un logiciel et d'un micrologiciel pour le dispositif non sécurisé.

7. Système informatique de l'une des revendications 1 à 6, dans lequel le module RoT comprend une capacité de fonction inaccessible physiquement, PUF, ou comprend une clé racine de client, CRK, clé publique pour vérifier l'au moins une première signature.

8. Système informatique de la revendication 7, dans lequel la clé publique CRK est une clé *Elliptic Curve Digital Signature Algorithm,* ECDSA, ou une clé Rivest-Shamir-Adleman, RSA.

9. Système informatique de la revendication 1-8, dans lequel le dispositif non sécurisé charge le chargeur de démarrage via une deuxième interface du dispositif non sécurisé et la deuxième interface est couplée à la première interface du dispositif sécurisé, ou le dispositif non sécurisé démarre selon le chargeur de démarrage après avoir chargé le chargeur de démarrage à partir du module RoT.

10. Dispositif sécurisé (100, 200) pour gérer une chaîne de confiance, le dispositif sécurisé comprenant:
un module *root of trust,* RoT, (202) pour vérifier au moins une première signature d'un chargeur de démarrage pour un dispositif non sécurisé (110, 210), le chargeur de démarrage étant stocké dans le module RoT; et
un module de transmission (204), couplé au module RoT, pour transmettre un signal au dispositif non sécurisé afin d'activer le dispositif non sécurisé, une fois que l'au moins une première signature a été vérifiée comme réussie;
le dispositif non sécurisé charge le chargeur de démarrage à partir du module RoT, après qu'un module de réception (212) du dispositif non sécurisé a reçu le signal du module de transmission.

11. Dispositif sécurisé de la revendication 10, dans lequel le module RoT vérifie au moins une deuxième signature pour le dispositif sécurisé, avant de vérifier au moins une première signature.

12. Dispositif sécurisé selon l'une des revendications 10 à 11, dans lequel le dispositif sécurisé passe en mode passif avant que le module de transmission ne transmette le signal, après que l'au moins une première signature du chargeur de démarrage a été vérifiée comme réussie.

13. Dispositif sécurisé de l'une des revendications 10 à 12, dans lequel le dispositif sécurisé s'éteint si l'au moins une première signature n'est pas vérifiée comme réussie.

14. Dispositif sécurisé de l'une des revendications 10 à 13, dans lequel le module RoT vérifie au moins une troisième signature d'au moins un logiciel et d'un micrologiciel pour le dispositif non sécurisé.

15. Dispositif sécurisé de l'une des revendications 10 à 14, dans lequel le module RdT comprend une capacité de fonction inaccessible physiquement, PUF, ou comprend une clé racine de client, CRK, clé publique pour vérifier l'au moins une première signature.

16. Dispositif sécurisé de la revendication 15, dans lequel la clé publique CRK est une clé *Elliptic Curve Digital Signature Algorithm,* ECDSA, ou une clé Rivest-Shamir-Adleman, RSA, ou le dispositif non sécurisé ne comprend pas de module RoT.
